# EUROPEAN PATENT SPECIFICATION

(11) **EP 4 095 097 B1**
(45) Date of publication and mention of the grant of the patent: **01.10.2025**
(21) Application number: 21744177.3
(22) Date of filing: 22.01.2021
(51) Int. Cl.: B01J 20/02, B01J 20/20, B01J 20/28, B01J 20/32, C01B 32/198, H01F 1/00, B82Y 25/00

(54) **METAL-ADSORBING COMPOSITE MATERIAL BASED ON MAGNETIC GRAPHENE OXIDE AND METHOD FOR OBTAINING SAME**
METALLADSORBIERENDES VERBUNDMATERIAL AUF DER BASIS VON MAGNETISCHEM GRAPHENOXID UND VERFAHREN ZU DESSEN HERSTELLUNG
MATÉRIAU COMPOSITE ADSORBANT DE MÉTAUX À BASE D'OXYDE DE GRAPHÈNE MAGNÉTIQUE ET SON PROCÉDÉ D'OBTENTION

(30) Priority: 22.01.2020 ES 202030050
(43) Date of publication of application: 30.11.2022
(73) Proprietor: Universidad De Malaga, 29071 Málaga (ES)
(72) Inventor: MONTORO LEAL, Pablo, 29590 Málaga (ES); GARCÍA MESA, Juan Carlos, 29590 Málaga (ES); LÓPEZ GUERRERO, María del Mar, 29590 Málaga (ES); VEREDA ALONSO, Elisa Isabel, 29590 Málaga (ES)
(74) Representative: Cueto, Sénida
(86) International application number: PCT/ES2021/070039
(87) International publication number: WO 2021/148700

(56) References cited:
- WO-A1-2011/082064
- US-A1- 2012 330 044
- WANJERI ET AL: "Isotherm and kinetic investigations on the adsorption of organophosphorus pesticides on graphene oxide based silica coated magnetic nanoparticles functionalized with 2-phenylethylamine", JOURNAL OF ENVIRONMENTAL CHEMICAL ENGINEERING, vol. 6, no. 1, 1 February 2018 (2018-02-01), NL, pages 1333 - 1346, XP055843803, ISSN: 2213-3437, DOI: 10.1016/j.jece.2018.01.064
- HEMMATI ET AL: "Magnetic nanoparticle based solid-phase extraction of heavy metal ions: A review on recent advances", MICROCHIMICA ACTA, vol. 185, no. 3, 6 February 2018 (2018-02-06), pages 1 - 32, XP036417407, ISSN: 0026-3672, [retrieved on 20180206], DOI: 10.1007/S00604-018-2670-4
- WANJERI V.W.O., SHEPPARD C.J., PRINSLOO A.R.E., NGILA J.C., NDUNGU P.G.: "Isotherm and kinetic investigations on the adsorption of organophosphorus pesticides on graphene oxide based silica coated magnetic nanoparticles functionalized with 2-phenylethylamine", JOURNAL OF ENVIRONMENTAL CHEMICAL ENGINEERING, ELSEVIER BV, NL, vol. 6, no. 1, 1 February 2018 (2018-02-01), NL, pages 1333 - 1346, XP055843803, ISSN: 2213-3437, DOI: 10.1016/j.jece.2018.01.064
- VEREDA ALONSO ELISA, LÓPEZ GUERRERO M.M., COLORADO CUETO PILAR, BARRENO BENÍTEZ JOSÉ, CANO PAVÓN JOSÉ MANUEL, GARCÍA DE TORRES AMP: "Development of an on-line solid phase extraction method based on new functionalized magnetic nanoparticles. Use in the determination of mercury in biological and sea-water samples", TALANTA, ELSEVIER, AMSTERDAM, NL, vol. 153, 1 June 2016 (2016-06-01), NL, pages 228 - 239, XP055843806, ISSN: 0039-9140, DOI: 10.1016/j.talanta.2016.03.027
- RASHIDI NODEH HAMID; WAN IBRAHIM WAN AINI; ALI IMRAN; SANAGI MOHD MARSIN: "Development of magnetic graphene oxide adsorbent for the removal and preconcentration of As(III) and As(V) species from environmental water samples", ENVIRONMENTAL SCIENCE AND POLLUTION RESEARCH, ECOMED, LANDSBERG,, DE, vol. 23, no. 10, 6 February 2016 (2016-02-06), DE, pages 9759 - 9773, XP035937360, ISSN: 0944-1344, DOI: 10.1007/s11356-016-6137-z
- TAHIR MUHAMMAD USMAN, SU XINTAI, ZHAO MENGQI, LIAO YINNIAN, WU RONGLAN, CHEN DEJUN: "Preparation of hydroxypropyl-cyclodextrin-graphene / Fe3O4 and its adsorption properties for heavy metals", SURFACES AND INTERFACES, vol. 16, 1 September 2019 (2019-09-01), pages 43 - 49, XP055843808, ISSN: 2468-0230, DOI: 10.1016/j.surfin.2019.04.007
- MONTORO-LEAL PABLO, GARCÍA-MESA JUAN CARLOS, LÓPEZ GUERRERO MARÍA DEL MAR, VEREDA ALONSO ELISA: "Comparative Study of Synthesis Methods to Prepare New Functionalized Adsorbent Materials Based on MNPs–GO Coupling", NANOMATERIALS, vol. 10, no. 304, 11 February 2020 (2020-02-11), pages 1 - 18, XP055843810, DOI: 10.3390/nano10020304

## Description

The present invention belongs to the sector of nanotechnology. It is intended to provide a synthesis with which to prepare a magnetic graphene oxide and to provide a novel nanomaterial with specific functionalization which has been synthesized therefrom. Furthermore, said material offers the possibility of use in two main applications, decontamination and treatment of spills; and recycling of high value materials.

### Background of the invention

Nanomaterials offer great interest to the industry and technology due to their unique physical chemical properties, high surface area and highly active surface locations, what make them incredibly useful for a wide range of applications. Among them, the magnetic nanoparticles (MNPs) and the graphene oxide (GO) are of great interest.

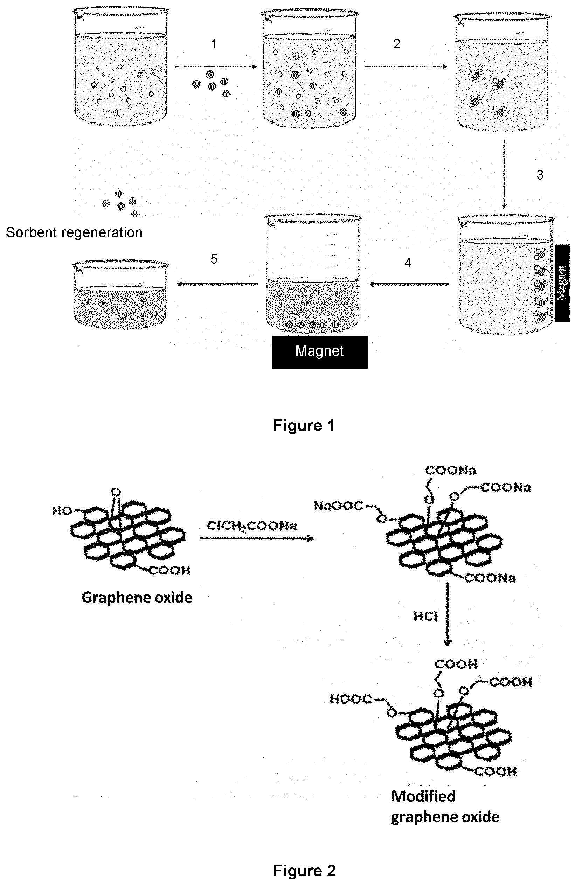

The MNPs are a new type of nanometric material that are attracted by a magnetic field, however, they do not retain residual magnetism when the magnetic field disappears. In recent years, studies have been made about MNPs, due to their potential applications as magnetic carriers in the field of medicine, decontamination of waste water, preconcentration of both anions and cations, etc. Among the existing MNPs, those of iron oxide (magnetite, Fe₃O₄, and maghemite, γ-Fe₂O₃) are the ones that have received greater attention, for their biocompatibility, biodegradability, physiological and chemical stability, low toxicity and strong magnetic response. This latter property allows for a variant of the traditional solid phase extraction, called magnetic solid phase extraction (MSPE). The suspended superparamagnetic nanoparticles adhered to the target species can be collected and separated from the matrix very rapidly by the use of a magnetic field. This feature makes them very useful for separation processes (FIG. 1), the advantages of which are a reduced analysis time, biocompatibility, they require a lower amount of reagents and allow the automation of analytical methodologies.

Graphene is another nanomaterial that has found great scientific interest due to its sole atomic plane of graphite, its structure in honeycomb form, large surface area and remarkable physical properties. Its theoretical surface area is 2.630 m²/g, which suggests a high adsorption capacity. The graphene oxide (GO) is readily obtained from natural graphite by a chemical oxidation process, which separates the layers of C with oxygen containing molecules, making it easily exfoliable in water. It shows a nanostructure in two dimensional sheets with a rich n-n delocalized electron system which does not interact strongly with organic compounds with benzene rings. On the other hand, the presence of various functional groups with oxygen (carbonyls, hydroxyls and epoxy) on GO is responsible for strong van der Waals interactions and hydrogen bonds, which determines a high adsorption to metal ions.

The adsorption on GO is very remarkable, but tedious, slow and requires high sample volumes. In order to overcome these problems, MNPs can be coupled over the GO sheets and the extraction can be rapidly carried out by means of a magnetic field, without the need for filtering or centrifuging¹⁻³. GO Bound to MNPs (magnetic graphene oxide, MGO) appears to be an excellent adsorbent^{4,5}. The combination of the graphene sheets with the MNPs has remarkable properties as a major dispersion of the nanoparticles (less aggregates are formed), large surface area, strong superparamagnetism and excellent extraction capacity. However, despite the improvements provided by the coupling, the resulting material would have their applications limited, such as its extractant capacity due to the lack of selectivity of both the MNPs and the GO. For this reason, many authors resort to their functionalization with chelating organic groups that increase the selectivity towards metal ions.

Some examples of materials that combine graphene or graphene oxide with magnetic nanoparticles are shown in:
- US2013099153 (A1), which discloses a hybrid material comprising graphene and iron oxide for use in the treatment of wastewater.
- CN103723788 (A), which discloses a method for adsorbing heavy metals by means of manganese and ferrite nanoparticles and a graphene compound.
- US2013344237 (A1), which discloses graphite nanocomposites with iron nanoparticles, double coated with an iron oxide layer and a layer of an amorphous compound with Si S-O bond
- WO201409130 (A1), which discloses a product for fixing heavy metals. The product is nanoparticles of graphite oxide, alone or combined with magnetic particles.
- CN105413647 (A), which discloses a method for preparing a material composed of graphene oxide and chitosan.

Therefore, none of these documents mention a coupling of magnetic nanoparticles with graphene oxide and modification to obtain covalent bonds.

To our knowledge, there is no method that combines the double covalent functionalization of the material (functionalizing both MNPs and GO), in addition to the double coupling MNPs-GO (chemical coupling - via covalent and physical bonding-) by means of electrostatic interactions and van der Waals forces--).

### References:

1. Azam, S. momomad, A. Microchim. Acta, 182 (2015) 257.
2. Wan Ibrain, WA, Rashide Nodeh, H. Hassan, YAE, Sanagi, MM Crit. Rev. Anal. Chem. 45 (2015) 270.
3. Yadollah, Y, Momoammad, F. Mahmz, A. Microchim. Acta, 182 (2015) 1491.
4. Rashidecember Nodeh, H, Wan Ibrain, WA, Ali, I, Marunsanagi, M Environ. Sci. Pollution. Res. 23 (2016) 9759.
5. Q1, T, Huang, C, Yan, S, Li n, XJ, Bread, S Y Talanta, 144 (2015) 1116.
6. Diagbuoy, PN, Ohu Owolabi, BI, Abebowale, KO RSC Advances, vol 5 (2015) 2536.
7. Islam, A, Ahmad H, Zaldi, N, Kumar, S Microchim. Acta, vol. 183 (2016) 289.
8. Wiverka, M. bibik, M TRAC Trend Anal Chem, 59 (2014) 50.
9. Du, D. Wang, L. Shao, Y. Wang, J. Engelhard, MH, Lin, And Anal. Chem. 83 (2011) 746.

### DESCRIPTION OF THE INVENTION

In the present specification M@GO-LG means functionalized magnetic graphene oxide attached to a ligand according to the definition shown below.

LG means "ligand".

The present invention relates to a composite material, M@GO-LG, metal adsorbent comprising:
- a hybrid material, M@GO, comprising activated magnetic graphene oxide, MGO-A, bonded by covalent bonding to at least one first coupling reagent, which is an alkylpolyamine; wherein MGO-A is MGO Activated by the introduction of acid groups, and MGO is magnetic GO, formed by coated MNPs, modified with at least amino groups (NH₂) and/or hydroxyl groups (OH) on its surface, coupled by physical forces and covalent bonds to GO, wherein the covalent bond is an amide or ester bond between amino or hydroxyl groups of the modified coated MNPs and acid groups present in the GO sheets; and
- a ligand (LG) comprising a chelating functional group, said ligand being bound to M@GO by at least said first coupling reagent, thereby forming the composite material, M@GO-LG, of the invention.

The M@GO hybrid material can be defined as MGO capable of being functionalized.

GO has hydroxyl (OH) and epoxy groups, but also has acid groups (COOH). The latter are those used to form the amide or ester and to couple the magnetic nanoparticles. After this coupling between GO and MNPs, whereby the MGO has been obtained, the OH groups are oxidized to CH₂COOH and the epoxy groups present to--O--CH₂-COOH. In this way the MGO an is obtained, i.e., MGO with additional acid groups which can be anchored to the chelating ligand through the coupling reagent.

The material of the invention combines always covalent functionalization (there is covalent bonding between the ligand and the MNPs, and there is also covalent bonding between the ligand and GO), and the double coupling between MNPs and GO (covalent and dispersive).

The fact that there are covalent bonds between the different components of the M@GO-LG composite material increases their useful life as the extractant.

The ligand comprises atoms with at least one pair of lone electrons capable of coordinating with a metal center.

According to particular embodiments, the ligand comprises nitrogen, oxygen, sulfur atoms or combinations thereof.

According to particular embodiments the ligand may be selected from a compound derived from thiocarbonohydrazide, ethylenediaminetetraacetic acid -EDTA-, ammonium pyrrolidindithiocarbamate -APDC-, methylthiosalicylate, and sulfanilic acid.

According to particular embodiments the ligand is a compound derived from thiocarbonohydrazide selected from 1,5-bis (2-pyridyl)-3-sulfophenyl methylene] thiocarbonyloxyhydrazide -PSTH -, (1,5-bis-(di-2-pyridyl) methylene thiocarbonohyrazide-DPTH -, 1,5-bis [phenyl-(2-pyridyl)methylene] thiocarbonohydrazide - BPTH --and 1,5-bis (2-pyridyl)methylene thiocarbonohydrazide -PMTH-.

In the composite material of the invention there are n-n interactions between the electronic cloud of the GO sheet and the aromatic system of the introduced chelating ligand.

In the case of ligands with the functional group C=S, C=O, the ligand shows a tautomerization equilibrium of the carbon-heteroatom bond, such as C=S/C-SH. The equilibrium of tautomers is shifted towards the C-SH species, which presents the more extended electronic system. By being a reduced form of the S or O, the chelating characteristics of the ligand are enhanced.

The MNPs may be nanoparticles of iron, nickel, cobalt, or nanoparticles of one or more chemical compounds of these elements. According to particular embodiments, the MNPs are iron oxides obtained from their salts; among the salts of Fe (II):FeCl₂, FeBr₂, FeI₂ FeCO₃, Fe (NO₃)₂, FeO, FeSO₄, and among the Fe(lll) compounds, for example, Fe₂Cl₃, FeBr₃, Fel₃, Fe (NO₃)₃, Fe₂O₃, Fe₂(SO₄)₃ can be used, and preferably, they are magnetite According to further particular embodiments, the nanoparticles may be Co Fe₂O₄; CoZnFe₂O₄; NiO.

The size of the nanoparticles (before being coated and modified) can be between 10 and 25 nm, preferably between 13 and 18 nm.

The MNPs in the composite of the invention, M@GO-LG, are coated with a material selected from inorganic polymers, biopolymers such as chitosan, silicon compounds and aluminas. Among the silicon compounds are silicas (eg, mesoporous silica, controlled pore glass, silica gel). According to a preferred embodiment, they are coated with silica, and most preferably with mesoporous silica, preferably, tetraethylorthosilicate -TEOS - is employed.

The coated MNPs are further modified with a compound selected from silane, silanol, siloxane or polysiloxane, such that said compound has at least one nitrogen functional group. Preferably said compound is an aminoalkyl alkoxysilane, preferably aminoalkyl trialkoxysilane, most preferably aminopropyltrimethoxysilane.

The coupling reagent may be:
- any alkyl polyamine, such as, for example, ethylenediamine, diethylenetriamine, triethylenetetramine, tetraethylenepentamine, or
- an alkyl polyamine linked to a polyaldehyde.

The polyaldehyde may be, for example, glutaraldehyde, butanedial, propanedial.

According to particular embodiments the first coupling reagent is an alkyl polyamine, which is linked to a second coupling reagent, which is a polyaldehyde.

According to particular embodiments the composite material has a pore size of between 80 and 110 Å, preferably between 95 and 100 Å and a surface area of between 15 and 25 m²/g, preferably between 18 and 20 m² /g.

According to preferred embodiments this first coupling reagent is EDA (ethylenediamine), and more preferably is EDA linked to a polyaldehyde, preferably glutaraldehyde as the second coupling reagent.

According to a preferred embodiment the composite material (M@GO-LG) comprises:
- a hybrid material, M@GO, comprising activated magnetic graphene oxide (MGO A), attached to the coupling reagents EDA and glutaraldehyde, in which EDA is linked to glutaraldehyde; wherein MGO a is MGO activated by the introduction of acid groups, and MGO is magnetic graphene oxide, formed by MNPs of silica coated magnetite, modified with at least amino groups on their surface, coupled by physical forces and covalent bonds to GO, wherein the covalent bond is an amide bond between amino groups of the modified coated magnetite MNPs and acid groups present on the GO sheets; and
- the ligand is selected from:
   - 1,5-bis(2-pyridyl)-3-sulfophenyl methylene]thiocarbonohydrazide -PSTH-; PSTH being linked to M@GO by EDA and glutaraldehyde, giving rise to M@GO-PS;
   - or (1,5-bis-(di-2-pyridyl)methylene thiocarbonohydrazide -DPTH-; DPTH being linked to M@GO by EDA and glutaraldehyde, giving rise to M@GO-DP; or
   - 1,5-bis[phenyl-(2-pyridyl)methylene] thiocarbonohydrazide -BPTH- with BPTH linked to M@GO via EDA and glutaraldehyde, giving rise to M@GO- BP; and o 1,5-bis(2-pyridyl)methylene thiocarbonohydrazide -PMTH-, PMTH being bound to M@GO by EDA and glutaraldehyde, giving rise to M@GO-PM.

Especially preferably, the ligand is 1,5-bis [(2-pyridyl)- 3-sulfophenyl methylene] thiocarbonohydrazide -PSTH-, and, in the resulting composite, M@GO-PS, PSTH is attached to M @GO by EDA and glutaraldehyde,

The present invention also relates to a hybrid material, M@GO, comprising activated magnetic graphene oxide (MGO-A), covalently bonded to at least one first coupling reagent, which is an alkylpolyamine
- in which MGO-A is MGO activated by the introduction of acid groups,
- and MGO is magnetic GO, formed by coated MNPs, modified with at least amino groups (NH₂) and/or hydroxyl groups (OH) on its surface,
coupled by physical forces and covalent bonds to GO, wherein the covalent bond is an amide or ester bond between amino or hydroxyl groups of the modified coated NMPs and acid groups present in the GO sheets.

In the defined M@GO hybrid material, the MNPs can be selected from nanoparticles of iron, nickel, cobalt, and nanoparticles of chemical compounds of these elements. Examples of MNPs can be the same as those defined above for the composite material of the invention. preferably the magnetic nanoparticles are iron oxides.

In the defined M@GO hybrid material, the MNPs can be coated, as previously defined, with a material selected from inorganic polymers, biopolymers such as chitosan, silicon compounds and aluminas. Examples of silicon compounds can be the same as those defined above for the composite material of the invention.

In the defined M@GO hybrid material, the MNPs the coated magnetic particles can be modified with a compound selected from silane, silanol, siloxane or polysilane, such that said compound has at least one nitrogenated functional group capable of providing amino groups to the nanoparticles, preferably said compound being an aminoalkylalkoxysilane. In the defined M@GO hybrid material, the Coated MNPs can be modified as defined above. In the M@GO hybrid material the first coupling reagent is an alkylpolyamine and preferably the alkylpolyamine is EDA.

According to a preferred embodiment, the M@GO hybrid material comprises activated magnetic graphene oxide (MGO-A), attached to the first coupling reagent EDA,
- wherein MGO-A is MGO activated by the introduction of acid groups, and
- MGO is magnetic GO, formed by MNPs of silica coated magnetite, modified with at least amino groups on its surface, coupled by physical forces and covalent bonds to GO, wherein the covalent bond is an amide bond between amino groups of the modified silica coated magnetite MNPs and acid groups present in the GO sheets.

The present invention also relates to a precursor material, M@GO-RA, which comprises the hybrid material M@GO defined above linked to a second coupling reagent, such as a polyaldehyde, e.g., glutaraldehyde, butanedial, propanedial, and wherein the first coupling reagent, alkylpolyamine, is linked to the second coupling reagent

According to particular embodiments, the M@GO-RA precursor material comprises the previously defined M@GO hybrid material linked to glutaraldehyde, M@GO-Glut, through the alkylpolyamine, preferably EDA.

The present invention also relates to an intermediate precursor material M@GO-RA bound to thiocarbonohydrazide (M@GO-Glut-THC).

The present invention also refers to an activated magnetic graphene oxide (MGO-A) consisting of MGO activated by the introduction of acid groups where MGO is magnetic GO, formed by coated MNPs, modified with at least amino groups (NH₂) and/or hydroxyl groups (OH) on its surface, coupled by physical forces and covalent bonds to GO, in which the covalent bond is an amide or ester bond between amino or hydroxyl groups of the modified coated MNPs and acid groups present in the sheets of GO.

The MGO A material comprises MGO and acid groups (COOH) attached thereto.

According to a preferred embodiment, the activated magnetic graphene oxide, MGO-A, consists of activated MGO wherein MGO is magnetic GO, formed by MNPs of silica coated magnetite, modified with at least amino groups on its surface, coupled by physical forces and covalent bonds to GO, wherein the covalent bond is an amide bond between amino groups of the modified coated magnetite MNPs and acid groups present in the GO sheets.

The present invention also relates to a method for preparing the M@GO-LG composite material, defined above, comprising:
- reacting activated magnetic graphene oxide (MGO-A), with at least one first coupling reagent, which is a polyalkylamine, obtaining the product M@GO;
- reacting the product resulting from the previous step with:
   - a ligand comprising a chelating functional group, or
   - previously, with a second coupling reagent, and then, with a ligand;
   such that said ligand binds to M@GO through at least the polyalkylamine as the first coupling reagent, obtaining the composite material M@GO-LG.

The method comprises, more specifically:
a) modifying coated MNPs with amino or hydroxyl functional groups, obtaining modified coated MNPs;
b) coupling the modified coated MNPs to GO, both by physical coupling (by electrostatic interactions and van der Waals forces) and by using a coupling agent that forms an amide or ester bond, obtaining MGO;
c) activate the MGO by adding acid groups to the surface of the GO sheets, obtaining activated MGO, MGO-A;
d) attaching at least one first coupling reagent, which is a polyalkylamine, to acid groups found on the surface of the activated MGO, transforming them into anchor points, susceptible to functionalization, obtaining the product M@GO; and
e) reacting the product of the previous step (M@GO) with
   e1) a ligand comprising a chelating functional group, or
   e2) previously, with a second coupling reagent, and then with a ligand; such that said ligand binds to M@GO through at least the first coupling reagent, obtaining the composite material M@GO-LG.

The binding of M@GO to the ligand occurs through functional groups of the coupling reagents, amino groups of the polyalkylamine (such as EDA), and, optionally, aldehyde groups of a polyaldehyde, such as glutaraldehyde.

According to particular embodiments, step e2) comprises (after reaction with a second coupling reagent, preferably glutaraldehyde) a reaction with thiocarbonohydrazide.

The magnetic nanoparticles can be coated with the materials which have been defined for the composite material of the invention, M@GO-LG, and in accordance with a preferred embodiment, they are coated with silica, preferably mesoporous silica, and to that end tetraethylorthosilicate is used. The way of coating the magnetic particles is conventional.

The coated magnetic nanoparticles can be modified with a compound selected from silane, silanol, siloxane or polysiloxane, such that said compound has at least one nitrogenated functional group, preferably said compound being an aminoalkylalkoxysilane.

According to a preferred embodiment, the modification of the coated MNPs comprises:
- mixing the coated MNPs with an aminoalkylalkoxysilane, preferably aminoalkyltrialkoxysilane, more preferably aminopropyltrimethoxysilane in alcohol; said alcohol is preferably ethanol;
- adjust the pH to 4.5 with acid, preferably acetic acid;
- heating the mixture between 50 and 70 °C, preferably at 60 °C, for a period between 1 and 3 hours, preferably 2 hours under an inert atmosphere, obtaining modified coated nanoparticles.

According to particular embodiments of the method of the invention, the coupling of the modified MNPs, to the GO, is carried out in the presence of a coupling agent, preferably said agent being N,N'-dicyclohexylcarbodiimide (DCC), which forms an amide bond.

According to particular embodiments of the method, a coupling of modified coated magnetite nanoparticles and GO is carried out, to this purppse the modified coated MNPs are suspended in alcohol, preferably ethanol, in an organic solvent, preferably N,N'-dicyclohexylcarbodiimide (DCC), stirring for a time between 30 and 50 hours, preferably between 40 and 50, more preferably 48 hours, obtaining a covalent anchorage in addition to physical adsorption between GO and the coated MNPs.

MNPs can be prepared and the coupling of the MNPs with GO can be carried out, as well as obtaining a material with MGO bound to a ligand, using other procedures⁶ or functionalizing only the GO sheet through the COOH groups, synthesizing the MNPs by coprecipitation and dispersing them on the GO sheet in the same medium.⁷

MGO is activated by introducing acid groups on the GO surface, for example, by reacting MGO with sodium chloroacetate. The activation of the MGO with additional acid groups makes it possible to have as many anchors as possible on the surface, and the subsequent reaction with a coupling reagent allows the binding to the ligand.

The preparation of the hybrid material, M@GO, comprises:
a) modifying coated MNPs with amino or hydroxyl functional groups, obtaining modified coated MNPs;
b) couple the modified coated MNPs to GO, both physically (by electrostatic interactions and van der Waals forces) and by using a coupling agent that forms an amide or ester bond, obtaining MGO;
c) activate the MGO by adding acid groups to the surface of the graphene oxide sheets, obtaining activated MGO, MGO-A; and
d) attaching at least one first coupling reagent, which is a polyalkylamine, to acid groups found on the surface of the activated MGO, transforming them into anchor points susceptible to functionalization, obtaining the M@GO product.

The coating of the nanoparticles, the modification of the coated nanoparticles and the activation of the GO, is carried out with the materials that have been mentioned above in the description of the hybrid material and by known reactions and/or methods.

The preparation of the precursor material M@GO-RA comprises:
- obtaining the hybrid material M@GO as defined above, and
- reacting it with a second coupling reagent, such as a polyaldehyde, e.g, glutaraldehyde, butanedial, propanedial, in aqueous acid medium (such as, for example, in glacial acetic acid) at reflux.

The preparation of the intermediate precursor material M@GO-RA-THC comprises:
- obtaining the precursor material M@GO-RA, as defined above; and
- reacting it with thiocarbonohydrazide in aqueous acid medium (such as, for example, in glacial acetic acid) at reflux.

### BRIEF DESCRIPTION OF THE FIGURES

**Figure 1****.** Extraction scheme of an analyte (for example, metals or organic compounds) in magnetic solid phase according to the state of the art⁸, and using a material according to the present invention, comprising:
   1) Dispersion of M@GO-PS in the sample from which it is intended to extract metals.
   2) Adsorption of the analyte in the material.
   3) Magnetic separation of the material of the sample matrix.
   4) Elution of the analyte.
   5) Magnetic separation of regenerated material.
**Figure 2****.** Diagram showing the modification of GO with sodium chloroacetate according to the state of the art⁹.
**Figure 3****.** Schematic of functionalizable magnetic graphene oxide (M@GO). LG = Ligand, (RA)-LG= ligand-bound coupling reagent.
**Figure 4****.** Structure of the PSTH ligand. Tautomeric equilibrium C=S(A)/C-SH(B).
**Figure 5****.** Structure of the DPTH ligand. Tautomeric equilibrium C=S(A)/C-SH(B).
**Figure 6A****.** The surface morphology of M@GO-PS observed by TEM at 200 nm scale.
**Figure 6B****.** The surface morphology of M@GO-DP observed by TEM at 200 nm scale.
**Figure 7****.** Nitrogen adsorption/desorption isotherms observed for M@GO-PS.
**Figure 8****.** Nitrogen adsorption/desorption isotherms observed for M@GO-DP.
**Figure 9****.** XPS spectrum of sulfur in the material that presents the unexpected interactions (A) and XPS spectrum of "usual" sulfur of the PSTH ligand (B).
**Figure 10****.** XPS spectrum of sulfur in the material that presents the unexpected interactions (A) and XPS spectrum of "usual" sulfur of the DPTH ligand (B).

### EXAMPLES OF EMBODIMENTS OF THE INVENTION

### Example 1

### Process to synthesize functionalizable graphene oxide (M@GO)

### Synthesis of magnetite MNPs

Ferric and ferrous salts (such as chlorides) in molar ratio (ferric:ferrous) 2:1 are dissolved in ultrapure water. This solution is placed in a three necked round bottom flask which is placed in an ultrasonic bath. The reaction is carried out at reflux and in an inert atmosphere. The ultrasonic equipment is turned on to vigorously stir the solution and it is heated to between 70 and 85°C. Once that temperature is reached, 30% (V/V) NH₃ is added and the inert atmosphere is restored. After 75 min the reaction is stopped and the suspension obtained is allowed to cool to room temperature. The magnetite nanoparticles obtained are washed first with water, then with a 0.02 M sodium chloride solution and, finally, with ethanol. This washing sequence is carried out several times, always recovering the nanoparticles from the suspension with the help of a magnet placed at the bottom of the flask, decanting the supernatant liquid. After washing, the MNPs are stored in ethanol.

### Coating with mesoporous silica

First, 8 ml of tetraethyl orthosilicate (TEOS), whose chemical formula is Si(OC₂H₅)₄, are mixed with 60 ml of glycerol and 200 ml of ethanol in a 500 ml beaker using ultrasonic stirring. The pH of the mixture is adjusted to 4.5 by adding acetic acid-sodium acetate buffer. This mixture is transferred to the three necked round bottom flask together with the previously prepared magnetite suspension. It is stirred with ultrasound, heating at reflux at 60°C in an inert atmosphere for two hours. Then, it is allowed to cool to room temperature and the suspension is washed (decanting with the help of a magnet) sequentially as follows:
1. Wash with deionized water.
2. Wash with methanol.

The solid obtained in the previous stage is diluted in 150 ml of a 1% solution of γ-aminopropyltrimethoxysilane (AP) in 95% ethanol and the pH is adjusted to 4.5 with acetic acid. This mixture is transferred to a 1 L three necked round bottom flask and heated at 60°C for two hours under nitrogen with stirring. Once this time has elapsed, the nanoparticles obtained are decanted with the help of the magnet, and washed twice with deionized water and twice with methanol. The powder obtained is allowed to dry in a desiccator at room temperature.

The result of this operation are the coated and modified MNPs. The purpose of the silica coating is twofold: to protect the magnetite from ambient oxygen, as well as to provide an anchor point through the amino group of γ-aminopropyltrimethoxysilane (AP).

A way of synthesizing magnetite nanoparticles is disclosed in González Moreno et al. (New J. Chem., 2017, 41, 8804-8811).

A procedure for coating nanoparticles with silica is described in Vereda Alonso et al. (Talanta 153 (2016) 228-239).

### MNPs-GO coupling

500 mg of GO (synthesized from graphite by the oxidation and exfoliation process of Diagboya et al.⁶) are suspended in 50 ml of ethanol together with 500 mg of coated and modified MNPs from the previous step and 0.25 g of N,N'-dicyclohexylcarbodiimide (DCC) suspended in 50 ml of ethanol. The mixture is sonicated for 10 min and refluxed at 50°C for 48 h. In this way, part of the MNPs will be covalently anchored to the GO sheet through an amide bond, which is formed by condensation between surface acid groups of GO and amino groups of the MNPs. Part of the MNPs will not be covalently anchored due to two factors: reaction yield or depletion of the GO active sites, so the remaining ones will be dispersed on the sheet. Therefore, the MNPs will be coupled to the GO through two mechanisms: covalent bond by condensation with the carboxylic acid groups and Van der Waals forces by interaction with the adsorbent GO sheet itself. The resulting product is called MGO.

### MGO activation

The MGO solid from the previous stage is taken and suspended in 50 ml of deionized water in a 500 ml beaker. The mixture is kept sonicating for 15 minutes and 5 g of NaOH (50 ml) are added. Next, 5 g of sodium chloroacetate (Cl-CH₃COONa) (in 50 ml) are introduced and the mixture is kept for 2 h in ultrasound at room temperature. The suspension is separated with the use of magnets and washed by resuspending the solid up to two times in water. This modification allows the increase of the active sites on the GO surface, by transforming the -OH groups into -CH₂COOH and the epoxide groups into functionalizable -O-CH₂COOH groups (figure 2).

### EDA-MGO coupling

The activated MGO solid (MGO-A) from the previous step is suspended in 50 ml of ethanol together with 4 ml of ethylenediamine (EDA) and 0.25 g of DCC in a 100 ml round bottom flask, and is kept at reflux. at 50°C for 48 h. The synthesized solid is called M@GO. The acid groups from the previous step will condense with the amino group, giving rise to amide bonds. In this way, we have free amino groups that act as double origin anchor points, the amino group of the coated MNPs dispersed on the sheet and the remaining uncondensed amino of the EDA group. Therefore, we can functionalize both the MNPs and the GO.

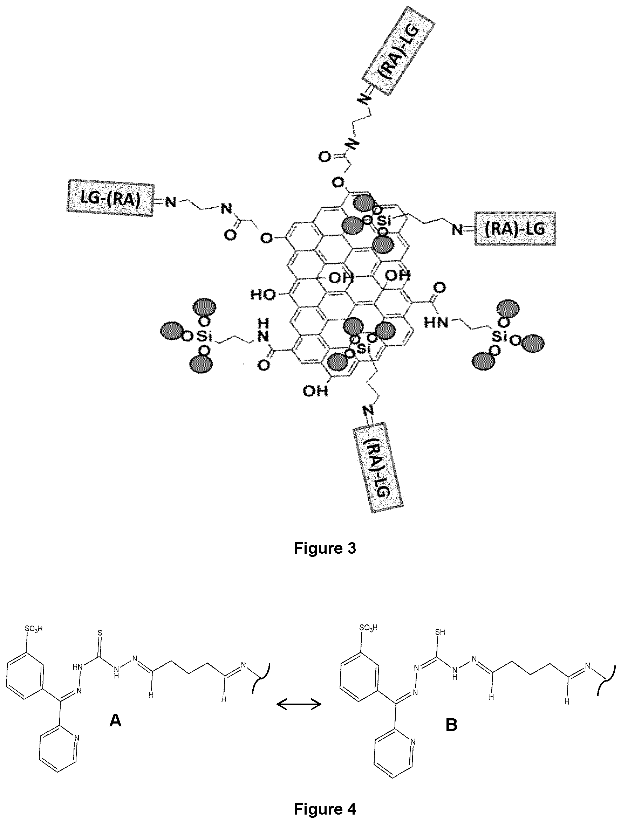

The synthesis yield of magnetic graphene oxide is 95%. The scheme of this material, M@GO, can be seen in figure 3. In figure 3 the M@GO is all that is observed except the ligand ("Si" with three circles on the oxygen atoms -red circles-).

### M@GO functionalization process

Starting from the magnetic graphene oxide activated in the previous step, M@GO the functionalization is carried out to introduce ligands. We introduce the functional group [1,5-bis(2-pyridyl)3-sulfophenyl methylene] thiocarbonohydrazide (PSTH) following the reaction steps:
*Step 1, synthesis of 2-benzoyl(3'-sulfophenyl)pyridine.* Weighing 2 g of 2-benzoylpyridine into a 100 mL round bottom flask. The flask is placed in an ice bath in a fume hood and 20 ml of 30% fuming sulfuric acid are added until all the solid has dissolved. The reaction is maintained for two hours and allowed to cool to room temperature. Finally, the contents of the flask are slowly and carefully poured over 180 ml of cold ether (4°C). A whitish precipitate is formed which is then recrystallized from the minimum amount of ethanol/water 1:1; obtaining whitish acicular crystals.
*Step 2, synthesis of M@GO-Glut.* Weighing 250 mg of M@GO into a flask and adding 20 ml of 1% glutaraldehyde in water and 5 drops of glacial acetic acid. It is refluxed for 4 hours, decanted with the help of a magnet and washed with deionized water.
*Step 3, synthesis of M@GO-Glut-THC.* The synthesized M@GO-Glut are placed in a flask and 20 ml of 0.5% thiocarbonohydrazide in water and 5 drops of glacial acetic acid are added. It is kept under reflux for 24 hours, it is decanted with the help of the magnet and it is washed with deionized water.
*Step 4, synthesis* of *M@GO-PS.* M@GO-Glut-THC is placed in a flask and the benzoyl(3'-sulfophenyl)pyridine, synthesized in the first step of this stage, dissolved at 0.25% in ethanol/water (40/30), is added. The reaction is maintained at reflux for 24 hours. Once this time has elapsed, it is magnetically decanted, washed with ethanol and left to dry in a desiccator for 2 days.

The functionalization yield of magnetic graphene oxide with PSTH is 85%. The structure of the PSTH ligand is seen in Figure 4A. The material resulting from this process is called M@GO-PS.

### Characterization of the adsorbent material M@GO-PS

### Transmission electron microscopy (TEM) and adsorption isotherms of N₂

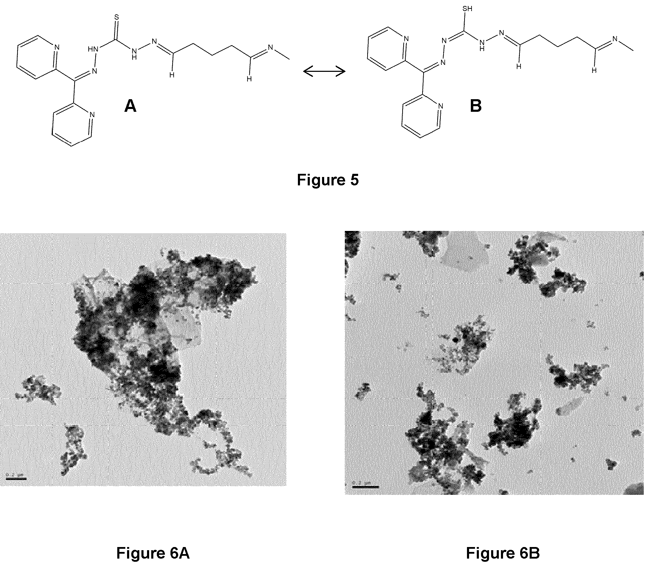

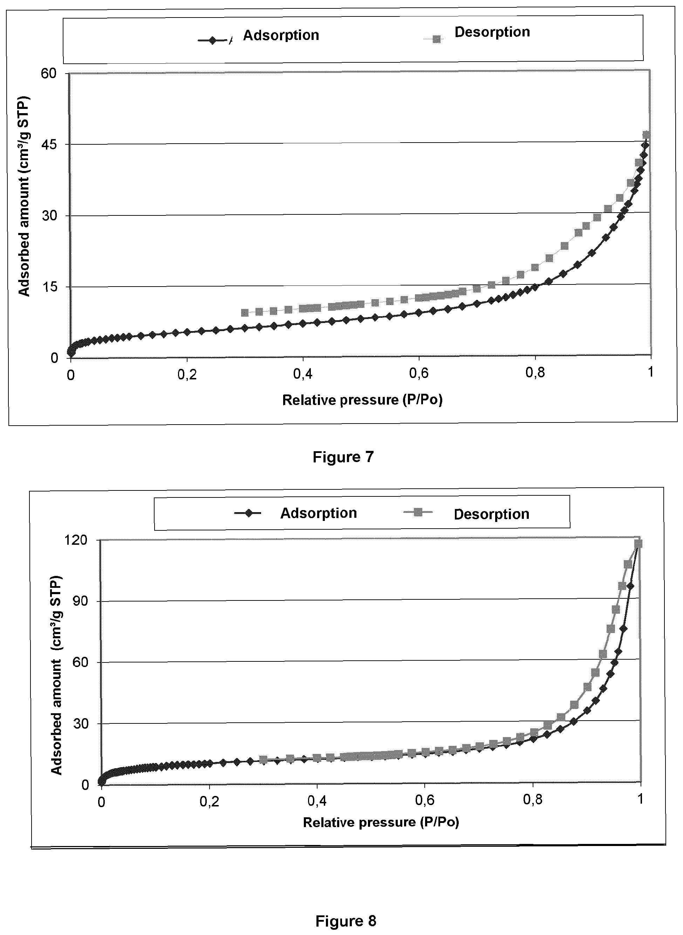

The morphology of the M@GO-PS surface was characterized by N₂ adsorption/desorption isotherms and TEM. In the TEM images (figure 6A) it can be clearly observed that the Fe₃O₄ nanoparticles are disorderly coupled on the GO sheet with a diameter between 12-20 nm. The size of the nanoparticles was selected intentionally, since smaller particles (<6 nm) show rapid magnetization saturation and reduced magnetic susceptibility, while large particles are difficult to disperse and have less active surface area. From the nitrogen adsorption experiments, it can be seen that the isotherms are type IV (figure 7), typical of mesoporous materials (pore size between 20-500 Å). In table 1 it can be seen that, indeed, the materials are mesoporous and have a higher surface area than the uncoupled GO (2.630 m²/g).

**Table 1 Morphological information of the material M@GO-PS**

| | |
|---|---|
| Pore size (Å) | 96.36 |
| Surface area (m²/g) | 19.58 |

### Mass spectrometry

**Table 2 Peak assignment of the MS spectrum**

| **Peak (M/z)** | **Fragment** |
|---|---|
| 64 | SO₂⁺ |
| 129 | 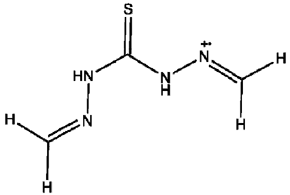 |
| 207 | 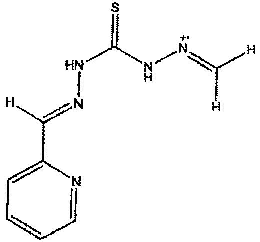 |

From the MS spectra, the characteristic peaks of the PSTH ligand fragments were assigned (Table 2). Peaks m/z = 129 and m/z = 207 were found, both related to the presence of thiocarbonohydrazide, a reagent used in the synthesis of PSTH. Furthermore, peak (m/z = 64) was attributed to the loss of SO₂ due to the presence of the sulfonic group in the structure.

### X-ray photoelectron spectroscopy

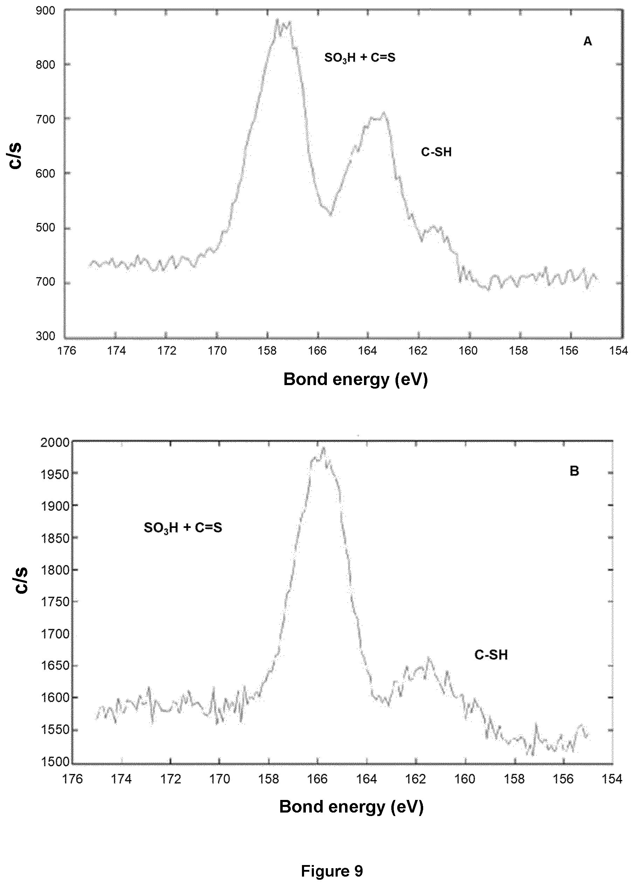

Two peaks are observed in the M@GO-PS spectrum of sulfur (FIG. 9A). The first of them (more energetic) is wider and corresponds to the sum of two contributions due to the presence of the sulfonic group (-SO₃H) and the C=S group. The second, less energetic peak, is attributed to the tautomerization equilibrium of the C=S/C-SH bond. In the case of our material, the peak corresponding to the C-SH bond clearly shows a higher intensity compared to the equivalent peak in the spectrum of the ligand without anchoring to the material (figure 9B). It can be concluded that the tautomeric equilibrium preferentially shifts towards one of the tautomeric forms (Figure 4A, 4B). The main explanation for this fact is the presence of electronic interactions between the π-π system of GO and the aromatic system of the functional group, favoring that tautomer with the most extended electronic system.

The chelating capacity of the ligand is directly related to the presence of N and S atoms in the structure, since the unpaired electrons of its valence shell can interact with the empty orbitals of metal cations. These unexpected interactions enhance the chelating capacity of the PSTH ligand, since the lower tautomeric form of sulfur (-C-SH versus C=S) is favored. In this way, the unpaired electrons of this atom would be more accessible in the formation of complexes.

The XPS data were especially striking as they revealed the presence of unexpected interactions in the M@GO-LG material, specifically M@GO-PS, which modify the chemical properties of the ligand.

### Example 2

### Obtaining M@GO-DP

### M@GO functionalization process

From the activated magnetic graphene oxide, obtained as described in example 1, the functionalization is carried out to introduce, in this case, the ligand 1,5-bisdi(2-pyridyl)methylene thiocarbonohydrazide (DPTH) following reaction steps:
*Step 1.* M@GO-Glut (M@GO-RA) is prepared as described in example 1.
*Step 2.* M@GO-Glut-THC is prepared. as described in example 1.
*Step 3.* Synthesis of M@GO-DP. Finally, the M@GO-Glut-THC obtained was placed in a round bottom flask and a 2% di-2-pyridyl ketone solution in ethanol was added, refluxed for 24 h. After this time, the product was decanted, washed with ethanol and left to dry in a desiccator.

The functionalization yield of magnetic graphene oxide with DPTH is 90%. The structure of the DPTH ligand is seen in Figure 5A. The material resulting from this process is called M@GO-DP.

### Characterization of the adsorbent material M@GO-DP

### Transmission electron microscopy (TEM) and adsorption isotherms of N₂

The morphology of the M@GO-DP surface was characterized by N₂ adsorption/desorption isotherms and TEM. In the TEM images (figure 6B) it can be clearly observed that the Fe₃O₄ nanoparticles are disorderly coupled on the GO sheet with a diameter between 12-20 nm. The size of the nanoparticles was selected intentionally, since smaller particles (<6 nm) show rapid magnetization saturation and reduced magnetic susceptibility, while large particles are difficult to disperse and have less active surface area. From the nitrogen adsorption experiments, it can be seen that the isotherms are type IV (figure 8), typical of mesoporous materials (pore size between 20-500 Å). In table 3 it can be seen that, indeed, the materials are mesoporous and have a higher surface area than the uncoupled GO (2.630 m²/g).

Table 3 Morphological information of the material

**Table 3 Morphological information of the material**

| **Material** | **M@GODP** |
|---|---|
| Pore size (Å) | 95.60 |
| Surface area (m²/g) | 37.88 |

**Table 4 Peak assignment of the MS spectrum**

| **Peak (M/z)** | **Fragment** |
|---|---|
| 129 | 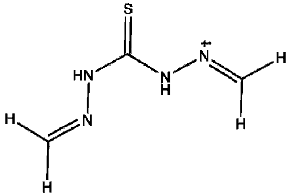 |
| 184 | 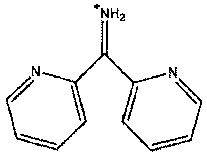 |
| **207** | 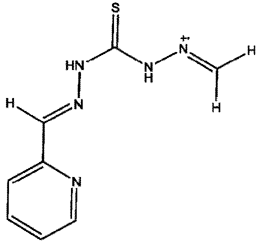 |
| | |

From the MS spectra, the characteristic peaks of the DPTH ligand fragments were assigned (Table 4). Peaks m/z = 129 and m/z = 207 were found, both related to the presence of thiocarbonohydrazide, a reagent used in the synthesis of DPTH. Furthermore, the peak (m/z = 184) was attributed to the use of di-2-pyridylketone during ligand synthesis.

### X-ray photoelectron spectroscopy

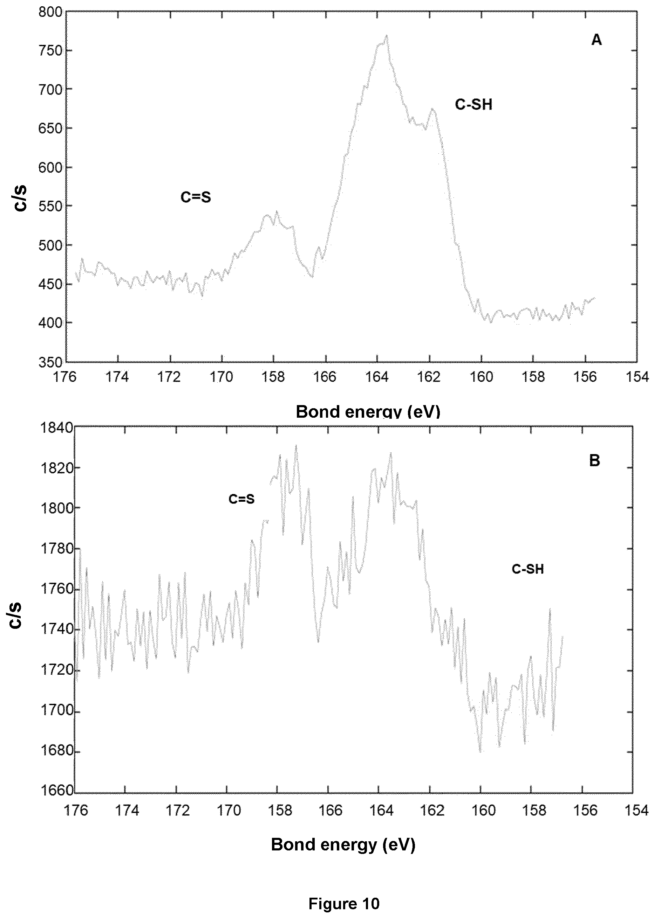

Two peaks are observed in the M@GODP spectrum of sulfur (figure 10A). The first of them (more energetic) corresponds the group C=S. The second less energetic peak is attributed to the tautomerization equilibrium of the C=S/C-SH bond. In the case of our material, the peak corresponding to the C-SH bond clearly presents a higher intensity compared to the equivalent peak in the spectrum of the ligand without anchoring to the material (figure 10B). It can be concluded that the tautomeric equilibrium preferentially shifts towards one of the tautomeric forms (Figure 10A, 10B). The main explanation for this fact is the presence of electronic interactions between the π-π system of GO and the aromatic system of the functional group, favoring that tautomer with the most extended electronic system.

The chelating capacity of the ligand is directly related to the presence of N and S atoms in the structure, since the unpaired electrons of its valence shell can interact with the empty orbitals of metal cations. These unexpected interactions improve the chelating capacity of the DPTH ligand, since the lower tautomeric form of sulfur (-C-SH versus C=S) is favored. In this way, the unpaired electrons of this atom would be more accessible in the formation of complexes.

### Material loading capacity

To study the adsorbent capacity of the new material, it was dispersed in a solution containing both noble and transition metals. As a load capacity test in the case of transition metals, Hg was chosen for the case of the M@GO-PS material, or Pb for the case of the M@GO-DP material due to the interest it entails at an environmental level due to its high toxicity, and V for its relevance in the production of ferrovanadium alloys. Although it is true that V is widespread in the earth's crust, it is not present in high concentration, so the development of methodologies that allow the extraction and recovery of this element is of great interest. An example is the recovery of vanadium from biodiesel ashes. On the other hand, in the case of noble metals, the adsorption capacity with Ag and Au, two highly valued elements with important applications in technological industries and jewelry, was studied.

The metal samples were prepared by mixing 25 mg of the magnetic material and 50 ml of a solution of Hg, V, Ag and Au 10 mg/L in each metal for the case of the material M@GO-PS, or 50 ml of a solution of Pb, V, Ag and Au 10 mg/L in each metal in the case of the M@GO-DP material, buffered with acetic acid/sodium acetate solution at pH 5. The suspension was stirred for 10 min under ultrasound and the mixture was allowed to incubate for 24 h. Finally, aliquots of the supernatant solution were taken after decanting with the magnet and the remaining metal concentration was measured with an inductively coupled plasma optical emission spectrometer (ICP-OES). The loading capacity was calculated by the difference between what was initially added and what was found after extraction. Tables 5A and 5B show the loading or adsorption capacity in mg/g of M@GO-PS and M@GO-DP, wherein good loading capacities are observed for the four elements tested.

**Table 5A Loading capacity (mg/g) of M@GO-PS.**

| **Element** | **(mg/g) of M@GO-PS** |
|---|---|
| *Hg* | 7.5 |
| *V* | 4.4 |
| *Ag* | 9.2 |
| *Au* | 18.8 |

**Table 5B Loading capacity (mg/g) of M@GO-DP.**

| **Element** | **(mg/g) of M@GO-DP** |
|---|---|
| *Pb* | 19.2 |
| *V* | 16.0 |
| *Ag* | 18.5 |
| *Au* | 16.9 |

### Advantages of the invention

This innovative material is proposed for the treatment of spills with the aim of decontaminating or recycling highly valued metals. Currently, at an industrial level, two main techniques are used: Chemical precipitation (removal of heavy metals making them insoluble with the addition of lime milk, sodium hydroxide or other chemical reagents that raise the pH) and electrolytic reduction (causing deposition on the electrode of the contaminant; it is used to recover valuable elements).
- Advantages over chemical precipitation: The separation by gravity between the matrix and the analytes is slow and tedious, in addition to the fact that it is necessary to alter the properties of the spill. In our case, the separation would only require seconds after the application of the external magnetic field.
- Advantages over electrolytic reduction: This technique usually requires large amounts of energy and very specific conditions for the recovery of each metal. For example, in the case of gold, a cell voltage of 8 V, current density 20 A/dm², temperature > 60 °C and an anode-cathode gap of 8 to 16 cm and a minimum pH of 10 are required. In addition, electrolysis equipment usually operates when the concentration of metals is in the mg/L range, while the proposed material is also capable of working with trace and ultratrace concentrations (µg/L), at which several of these elements are already toxic, given their bioaccumulative nature.

As mentioned above, there are also nanomaterials with excellent adsorbent properties for metals, such as GO and MNPs. In the case of GO, its use can be slow and tedious due to its small particle size, having to resort to traditional separation methods to separate the dispersed material from the sample matrix (filtration, centrifugation, etc.).

Table 6 shows the results of the elemental analysis of the four nanomaterials (MNPs-PSTH, 1-PSTH, 2-PSTH (prepared according to other procedures^{6,7}) and M@GO-PS). It can be seen that M@GO-PS has a higher atomic percentage of S and N, so it is considered the best functionalized one.

Taking into account the characterization tests, the elemental analysis showed that the magnetic graphene oxide of the invention is more functionalizable compared to the uncoupled MNPs.

**Table 6 Data obtained from the elemental analysis CNHS (atomic %) and Fe (% by weight)**

| **Sample** | **% C** | **%S** | **% N** | **% Fe** |
|---|---|---|---|---|
| *MNPs-PSTH* | 4.796 | 3.347 | 0.985 | 66 |
| *1-PSTH* | 7.259 | 0.469 | 0.795 | 38 |
| *2-PSTH* | 31.703 | 2.227 | 4.328 | 36 |
| *M@GO-PS* | 48.535 | 3.823 | 6.154 | 18 |

## Claims

1. A composite material, M@GO-LG, metal adsorbent, comprising:
• a hybrid material, M@GO, comprising activated magnetic graphene oxide (MGO-A), covalently bonded to at least one first coupling reagent, which is an alkylpolyamine; wherein MGO-A is MGO activated by the introduction of acid groups, and MGO is magnetic graphene oxide, formed by coated magnetic nanoparticles, modified with at least amino groups (NH₂) and/or hydroxyl groups (OH) on their surface , coupled by physical forces and covalent bonds to graphene oxide, wherein the covalent bond is an amide or ester bond between amino or hydroxyl groups of the modified coated magnetic nanoparticles and acid groups present in the graphene oxide sheets; and
• a ligand comprising a chelating functional group, said ligand being bound to M@GO via at least said first coupling reagent.

2. The material according to claim 1, wherein the ligand comprises atoms with at least one pair of lone electrons, capable of coordinating with a metal center, preferably, the ligand comprises nitrogen, oxygen, sulfur atoms or combinations thereof, more preferably,the ligand is selected from a compound derived from thiocarbonohydrazide, ethylenediaminetetraacetic acid -EDTA-, ammonium pyrrolidinedithiocarbamate -APDC-, methylthiosalicylate -TS- and sulfanilic acid; preferably a compound derived from thiocarbonohydrazide selected from 1,5-bis(2-pyridyl)-3-sulfophenylmethylene] thiocarbonohydrazide -PSTH-, (1,5-bis-(di-2-pyridyl)methylene thiocarbonohydrazide - DPTH-, 1,5-bis[phenyl-(2-pyridyl)methylene]thiocarbonohydrazide -BPTH- and 1,5-bis(2-pyridyl)methylenethiocarbonohydrazide -PMTH-.

3. The material according to any one of claims 1 or 2, wherein the magnetic nanoparticles are selected from nanoparticles of iron, nickel, cobalt, and nanoparticles of one or more chemical compounds of these elements, preferably the magnetic nanoparticles are iron oxides.

4. The material according to any one of claims 1 to 3, wherein the magnetic nanoparticles are coated with a material selected from among inorganic polymers, biopolymers, silicon compounds and aluminas, preferably, the coated magnetic nanoparticles are modified with a compound selected from silane, silanol, siloxane or polysiloxane, such that said compound has at least one nitrogenated functional group capable of providing amino groups to the nanoparticles, preferably said compound is an aminoalkylalkoxysilane.

5. The composite material according to claim 1, comprising:
• a hybrid material, M@GO, comprising magnetically activated graphene oxide (MGO-A), linked to the coupling reagents EDA and glutaraldehyde, wherein EDA is linked to glutaraldehyde; wherein MGO-A is MGO activated by the introduction of acid groups, and MGO is magnetic graphene oxide, formed by magnetic nanoparticles of magnetite coated with silica, modified with at least amino groups on their surface, coupled by physical forces and covalent bonds to graphene oxide, wherein the covalent bond is an amide bond between amino groups of the modified coated magnetite magnetic nanoparticles and acid groups present in the graphene oxide sheets; and
• the ligand is selected from:
∘ 1,5-bis(2-pyridyl)-3-sulfophenyl methylene] thiocarbonohydrazide -PSTH- , PSTH being bound to M@GO via EDA and glutaraldehyde, giving place to M@GO-PS;
∘ (1,5-bis-(di-2-pyridyl)methylene thiocarbonohydrazide -DPTH-, being DPTH attached to M@GO via EDA and glutaraldehyde, giving rise to M@GO-DP;
∘ 1,5-bis[phenyl-(2-pyridyl) methylene] thiocarbonohydrazide -BPTH-, with BPTH bound to M@GO via EDA and glutaraldehyde, giving rise to M@GO-BP; and
∘ -1,5-bis(2-pyridyl)methylene thiocarbonohydrazide -PMTH- , PMTH being bound to M@GO by EDA and glutaraldehyde, giving rise to M@GO-PM.

6. A hybrid material, M@GO, comprising activated magnetic graphene oxide (MGO-A), covalently linked to at least one first coupling reagent, which is an alkylpolyamine
• wherein MGO-A is activated MGO by introducing acid groups, and
• MGO is magnetic graphene oxide, formed by coated magnetic nanoparticles, modified with at least amino groups (NH₂) and/or hydroxyl groups (OH) on its surface, coupled by physical forces and covalent bonds to graphene oxide, wherein the covalent bond is an amide or ester bond between amino or hydroxyl groups of the modified coated magnetic nanoparticles and acid groups present in the graphene oxide sheets.

7. A precursor material, M@GO-RA, comprising the hybrid material M@GO defined in claim 6, wherein the first coupling reagent, alkylpolyamine, is linked to a second coupling reagent, preferably a polyaldehyde, more preferably the second coupling reagent is glutaraldehyde.

8. An intermediate precursor material, M@GO-RA-THC, comprising the precursor material defined in claim 7, M@GO-RA, bound to thiocarbonohydrazide.

9. An intermediate precursor material, M@GO-Glut-THC, according to claim 8, wherein the second coupling reagent is glutaraldehyde.

10. A method for preparing the M@GO-LG composite material defined in one of claims 1 to 5, comprising:
• reacting activated magnetic graphene oxide (MGO-A), with at least one first coupling reagent, which is a polyalkylamine, obtaining the product M@GO,
• reacting the product resulting from the previous step with:
∘ a ligand comprising a chelating functional group, or
∘ previously, with a second coupling reagent, and then with a ligand;
such that said ligand binds to M@GO through at least the polyalkylamine as the first coupling reagent, obtaining the M@GO-LG composite material

11. The method according to claim 10, comprising:
a) modifying coated magnetic nanoparticles (MNPs) with amino or hydroxyl functional groups, obtaining modified coated magnetic nanoparticles;
b) coupling the modified, coated magnetic nanoparticles to graphene oxide by using a coupling agent that forms an amide or ester bond, physical coupling will also take place (by electrostatic interactions and van der Waals forces) obtaining MGO;
c) activating the MGO by adding acid groups to the surface of the graphene oxide sheets, obtaining activated MGO, MGO-A;
d) attaching at least one first coupling reagent, which is a polyalkylamine, to acid groups found on the surface of the activated MGO, transforming them into anchor points susceptible to functionalization, obtaining the product M@GO; and
e) reacting the product of the previous step (M@GO) with
e1) a ligand comprising a chelating functional group, or
e2) previously, with a second coupling reagent, and then with a ligand,
such that said ligand is binds M@GO through at least the first coupling reagent, obtaining the M@GO-LG composite.

12. The method according to claim 10, wherein the MGO is activated by introducing acid groups on the surface of the magnetic graphene oxide.

13. A process for preparing the hybrid material, M@GO, defined in claim 6, comprising:
a) modifying coated magnetic nanoparticles (MNPs) with amino or hydroxyl functional groups, obtaining modified coated magnetic nanoparticles;
b) coupling the modified, coated magnetic nanoparticles to graphene oxide by using a coupling agent that forms an amide or ester bond, obtaining magnetic graphene oxide, MGO;
c) activate the MGO by adding acid groups to the surface of the graphene oxide sheets, obtaining activated MGO, MGO-A; and
d) attaching at least one first coupling reagent, which is a polyalkylamine, to acid groups found on the surface of the activated MGO, transforming them into anchor points susceptible to functionalization, obtaining the M@GO product.

14. Use of the material defined in one of claims 1 to 5 or of the material defined in claim 6, 7, or 8-9 as adsorbent of noble metals or transition metals, preferably. in the decontamination and treatment of discharges.

## Patentansprüche

1. Verbundmaterial M@GO-LG, Metalladsorptionsmittel, das Folgendes umfasst:
• ein Hybridmaterial M@GO, das aktiviertes magnetisches Graphenoxid (MGO-A) umfasst, das kovalent an mindestens ein erstes Kopplungsreagenz, das ein Alkylpolyamin ist, gebunden ist; wobei MGO-A durch die Einführung von Säuregruppen aktiviertes MGO ist und MGO magnetisches Graphenoxid ist, gebildet durch beschichtete magnetische Nanopartikel, die auf ihrer Oberfläche mit mindestens Aminogruppen (NH₂) und/oder Hydroxylgruppen (OH), die durch physikalische Kräfte und kovalente Bindungen an Graphenoxid gekoppelt sind, modifiziert sind, wobei die kovalente Bindung eine Amid- oder Esterbindung zwischen Amino- oder Hydroxylgruppen der modifizierten beschichteten magnetischen Nanopartikel und in den Graphenoxidschichten vorhandenen Säuregruppen ist; und
• einen Liganden, der eine chelatbildende funktionelle Gruppe umfasst, wobei der Ligand über mindestens das erste Kopplungsreagenz an M@GO gebunden ist.

2. Material nach Anspruch 1, wobei der Ligand Atome mit mindestens einem Paar von Einzelelektronen umfasst, die in der Lage sind, sich mit einem Metallzentrum zu koordinieren, wobei der Ligand vorzugsweise Stickstoff-, Sauerstoff-, Schwefelatome oder Kombinationen davon umfasst; noch bevorzugter ist der Ligand aus einer Verbindung ausgewählt, die von Thiocarbonohydrazid, Ethylendiamintetraessigsäure (EDTA), Ammoniumpyrrolidindithiocarbamat (APDC), Methylthiosalicylat (TS) und Sulfanilsäure abgeleitet ist; vorzugsweise einer Verbindung, die von Thiocarbonohydrazid, ausgewählt aus 1,5-Bis(2-pyridyl)-3-sulfophenylmethylen]thiocarbonohydrazid (PSTH), (1,5-Bis-(di-2-pyridyl)-methylen]thiocarbonohydrazid (DPTH), 1,5-Bis[phenyl-(2-pyridyl)-methylen]thiocarbonohydrazid (BPTH) und 1,5-Bis(2-pyridyl)-methylenthiocarbonohydrazid (PMTH), abgeleitet ist.

3. Material nach einem der Ansprüche 1 oder 2, wobei die magnetischen Nanopartikel aus Nanopartikeln von Eisen, Nickel, Kobalt und Nanopartikeln von einer oder mehreren chemischen Verbindungen dieser Elemente ausgewählt sind; vorzugsweise sind die magnetischen Nanopartikel Eisenoxide.

4. Material nach einem der Ansprüche 1 bis 3, wobei die magnetischen Nanopartikel mit einem Material beschichtet sind, das aus anorganischen Polymeren, Biopolymeren, Siliziumverbindungen und Aluminiumoxiden ausgewählt ist, wobei die beschichteten magnetischen Nanopartikel vorzugsweise mit einer Verbindung modifiziert sind, die aus Silan, Silanol, Siloxan oder Polysiloxan ausgewählt ist, sodass die Verbindung mindestens eine stickstoffhaltige funktionelle Gruppe aufweist, die in der Lage ist, den Nanopartikeln Aminogruppen bereitzustellen, wobei die Verbindung vorzugsweise ein Aminoalkylalkoxysilan ist.

5. Verbundmaterial nach Anspruch 1, das Folgendes umfasst:
• ein Hybridmaterial, M@GO, das magnetisch aktiviertes Graphenoxid (MGO-A) umfasst, das mit den Kopplungsreagenzien EDA und Glutaraldehyd verknüpft ist, wobei EDA mit Glutaraldehyd verknüpft ist; wobei MGO-A durch die Einführung von Säuregruppen aktiviertes MGO ist und MGO magnetisches Graphenoxid ist, gebildet durch magnetische Nanopartikel von Magnetit, die mit Siliziumdioxid beschichtet sind und auf ihrer Oberfläche mit mindestens Aminogruppen, die durch physikalische Kräfte und kovalente Bindungen an Graphenoxid gekoppelt sind, modifiziert sind, wobei die kovalente Bindung eine Amidbindung zwischen Aminogruppen der modifizierten beschichteten magnetischen Magnetit-Nanopartikel und in den Graphenoxidschichten vorhandenen Säuregruppen ist; und
• der Ligand ausgewählt ist aus:
∘ 1,5-Bis(2-pyridyl)-3-sulfophenylmethylen]thiocarbonohydrazid (PSTH), wobei PSTH über EDA und Glutaraldehyd an M@GO gebunden ist, wodurch M@GO-PS entsteht;
∘ (1,5-Bis-(di-2-pyridyl)methylenthiocarbonohydrazid (DPTH), wobei DPTH über EDA und Glutaraldehyd mit M@GO verbunden ist, wodurch M@GO-DP entsteht;
∘ 1,5-Bis[phenyl-(2-pyridyl)methylen]thiocarbonohydrazid (BPTH), wobei BPTH über EDA und Glutaraldehyd an M@GO gebunden ist, wodurch M@GO-BP entsteht; und
∘ 1,5-Bis(2-pyridyl)methylenthiocarbonohydrazid (PMTH), wobei PMTH durch EDA und Glutaraldehyd an M@GO gebunden ist, wodurch M@GO-PM entsteht.

6. Hybridmaterial M@GO, das aktiviertes magnetisches Graphenoxid (MGO-A) umfasst, das kovalent an mindestens ein erstes Kopplungsreagenz, das ein Alkylpolyamin ist, gebunden ist,
• wobei MGO-A durch Einführung von Säuregruppen aktiviertes MGO ist und
• MGO magnetisches Graphenoxid ist, gebildet durch beschichtete magnetische Nanopartikel, die auf ihrer Oberfläche mit mindestens Aminogruppen (NH₂) und/oder Hydroxylgruppen (OH), die durch physikalische Kräfte und kovalente Bindungen an Graphenoxid gekoppelt sind, modifiziert sind, wobei die kovalente Bindung eine Amid- oder Esterbindung zwischen Amino- oder Hydroxylgruppen der modifizierten beschichteten magnetischen Nanopartikel und in den Graphenoxidschichten vorhandenen Säuregruppen ist.

7. Vorläufermaterial M@GO-RA, das das Hybridmaterial M@GO nach Anspruch 6 umfasst, wobei das erste Kopplungsreagenz Alkylpolyamin mit einem zweiten Kopplungsreagenz, vorzugsweise einem Polyaldehyd, verknüpft ist, wobei das zweite Kopplungsreagenz noch bevorzugter Glutaraldehyd ist.

8. Zwischenvorläuferprodukt M@GO-RA-THC, das das Vorläufermaterial M@GO-RA nach Anspruch 7, gebunden an Thiocarbonohydrazid, umfasst.

9. Zwischenvorläuferprodukt M@GO-Glut-THC nach Anspruch 8, wobei das zweite Kopplungsreagenz Glutaraldehyd ist.

10. Verfahren zur Herstellung des M@GO-LG-Verbundmaterials nach einem der Ansprüche 1 bis 5, das Folgendes umfasst:
• Umsetzen von aktiviertem magnetischem Graphenoxid (MGO-A) mit mindestens einem ersten Kopplungsreagenz, das ein Polyalkylamin ist, Erhalten des Produkts M@GO,
• Umsetzen des aus dem vorherigen Schritt resultierenden Produkts mit:
∘ einem Liganden, der eine chelatbildende funktionelle Gruppe umfasst, oder
o vorab mit einem zweiten Kopplungsreagenz und anschließend mit einem Liganden;
sodass der Ligand über mindestens das Polyalkylamin als erstes Kopplungsreagenz an M@GO bindet, wodurch das M@GO-LG-Verbundmaterial erhalten wird.

11. Verfahren nach Anspruch 10, das Folgendes umfasst:
a) Modifizieren von beschichteten magnetischen Nanopartikeln (MNP) mit funktionellen Amino- oder Hydroxylgruppen, Erhalten von modifizierten beschichteten magnetischen Nanopartikeln;
b) Koppeln der modifizierten beschichteten magnetischen Nanopartikel an Graphenoxid unter Verwendung eines Kopplungsmittels, das eine Amid- oder Esterbindung bildet, wobei auch ein physikalisches Koppeln (durch elektrostatische Wechselwirkungen und van-der-Waals-Kräfte) stattfindet, wodurch MGO erhalten wird;
c) Aktivieren des MGO durch Anfügen von Säuregruppen an die Oberfläche der Graphenoxidschichten, Erhalten von aktiviertem MGO, MGO-A;
d) Verbinden mindestens eines ersten Kopplungsreagenz, das ein Polyalkylamin ist, mit Säuregruppen, die sich auf der Oberfläche des aktivierten MGO befinden, Umwandeln von diesen in Ankerpunkte, die für eine Funktionalisierung empfänglich sind, Erhalten des M@GO-Produkts; und
e) Umsetzen des Produkts aus dem vorherigen Schritt (M@GO)
e1) mit einem Liganden, der eine chelatbildende funktionelle Gruppe umfasst, oder
e2) vorab mit einem zweiten Kopplungsreagenz und anschließend mit einem Liganden,
sodass der Ligand durch mindestens das erste Kopplungsreagenz an M@GO bindet, wodurch der M@GO-LG-Verbundstoff erhalten wird.

12. Verfahren nach Anspruch 10, wobei das MGO durch Einführung von Säuregruppen auf der Oberfläche des magnetischen Graphenoxids aktiviert wird.

13. Verfahren zur Herstellung des Hybridmaterials M@GO nach Anspruch 6, das Folgendes umfasst:
a) Modifizieren von beschichteten magnetischen Nanopartikeln (MNP) mit funktionellen Amino- oder Hydroxylgruppen, Erhalten von modifizierten beschichteten magnetischen Nanopartikeln;
b) Koppeln der modifizierten beschichteten magnetischen Nanopartikel an Graphenoxid unter Verwendung eines Kopplungsmittels, das eine Amid- oder Esterbindung bildet, Erhalten von magnetischem Graphenoxid (MGO);
c) Aktivieren des MGO durch Anfügen von Säuregruppen an die Oberfläche der Graphenoxidschichten, Erhalten von aktiviertem MGO, MGO-A; und
d) Verbinden mindestens eines ersten Kopplungsreagenz, das ein Polyalkylamin ist, mit Säuregruppen, die sich auf der Oberfläche des aktivierten MGO befinden, Umwandeln von diesen in Ankerpunkte, die für eine Funktionalisierung empfänglich sind, Erhalten des Produkts M@GO.

14. Verwendung des Materials nach einem der Ansprüche 1 bis 5 oder des Materials nach Anspruch 6, 7 oder 8-9 als Adsorptionsmittel von Edelmetallen oder Übergangsmetallen, vorzugsweise bei der Dekontamination und Behandlung von Abwässern.

## Revendications

1. Matériau composite, M@GO-LG, adsorbant de métaux, comprenant :
• un matériau hybride, M@GO, comprenant de l'oxyde de graphène magnétique activé (MGO-A), lié de façon covalente à au moins un premier réactif de couplage, qui est une alkylpolyamine ; MGO-A étant du MGO activé par l'introduction de groupes acides et MGO étant de l'oxyde de graphène magnétique, formé par des nanoparticules magnétiques enrobées, modifiées avec au moins des groupes amino (NH₂) et/ou des groupes hydroxyle (OH) sur leur surface, couplées par des forces physiques et des liaisons covalentes à de l'oxyde de graphène, la liaison covalente étant une liaison amide ou ester entre des groupes amino ou hydroxyle des nanoparticules magnétiques enrobées modifiées et des groupes acides présents dans les feuillets d'oxyde de graphène ; et
• un ligand comprenant un groupe fonctionnel chélateur, ledit ligand étant lié à M@GO par l'intermédiaire d'au moins ledit premier réactif de couplage.

2. Matériau selon la revendication 1, dans lequel le ligand comprend des atomes renfermant au moins une paire d'électrons célibataires, capables de former une liaison de coordination avec un centre métallique, de préférence, le ligand comprend des atomes d'azote, d'oxygène, de soufre ou des combinaisons de ceux-ci, plus préférablement, le ligand est choisi parmi un composé dérivé de thiocarbonohydrazide, l'acide éthylènediaminetétraacétique - EDTA -, le pyrrolidinedithiocarbamate d'ammonium - APDC -, le thiosalicylate de méthyle - TS - et l'acide sulfanilique ; de préférence un composé dérivé de thiocarbonohydrazide choisi parmi le 1,5-bis(2-pyridyl)-3-sulfophénylméthylène]thiocarbonohydrazide - PSTH -, le 1,5-bis(di-2-pyridyl)méthylènethiocarbonohydrazide - DPTH -, le 1,5-bis[phényl(2-pyridyl)méthylène]thiocarbonohydrazide - BPTH - et le 1,5-bis(2-pyridyl)méthylènethiocarbonohydrazide - PMTH -.

3. Matériau selon l'une quelconque des revendications 1 ou 2, dans lequel les nanoparticules magnétiques sont choisies parmi des nanoparticules de fer, de nickel, de cobalt et des nanoparticules d'un ou plusieurs composés chimiques de ces éléments, de préférence les nanoparticules magnétiques sont des oxydes de fer.

4. Matériau selon l'une quelconque des revendications 1 à 3, dans lequel les nanoparticules magnétiques sont enrobées d'un matériau choisi parmi des polymères inorganiques, des biopolymères, des composés du silicium et des alumines, de préférence, les nanoparticules magnétiques enrobées sont modifiées avec un composé choisi parmi un silane, un silanol, un siloxane ou un polysiloxane, de façon telle que ledit composé a au moins un groupe fonctionnel azoté capable de doter les nanoparticules de groupes amino, de préférence ledit composé est un aminoalkylalcoxysilane.

5. Matériau composite selon la revendication 1, comprenant :
• un matériau hybride, M@GO, comprenant de l'oxyde de graphène magnétiquement activé (MGO-A), relié aux réactifs de couplage EDA et glutaraldéhyde, l'EDA étant relié au glutaraldéhyde ; MGO-A étant du MGO activé par l'introduction de groupes acides et MGO étant de l'oxyde de graphène magnétique, formé par des nanoparticules magnétiques de magnétite enrobées de silice, modifiées avec au moins des groupes amino sur leur surface, couplées par des forces physiques et des liaisons covalentes à de l'oxyde de graphène, la liaison covalente étant une liaison amide entre des groupes amino des nanoparticules magnétiques de magnétite enrobées modifiées et des groupes acides présents dans les feuillets d'oxyde de graphène ; et
• le ligand est choisi parmi :
∘ le 1,5-bis(2-pyridyl)-3-sulfophénylméthylène]thiocarbonohydrazide - PSTH -, le PSTH étant lié à M@GO par l'intermédiaire de l'EDA et du glutaraldéhyde, ce qui donne M@GO-PS ;
∘ le 1,5-bis(di-2-pyridyl)méthylènethiocarbonohydrazide - DPTH -, le DPTH étant fixé à M@GO par l'intermédiaire de l'EDA et du glutaraldéhyde, ce qui engendre M@GO-DP ;
∘ le 1,5-bis[phényl(2-pyridyl)méthylène]thiocarbonohydrazide - BPTH -, le BPTH étant lié à M@GO par l'intermédiaire de l'EDA et du glutaraldéhyde, ce qui engendre M@GO-BP ; et
∘ le 1,5-bis(2-pyridyl)méthylènethiocarbonohydrazide - PMTH -, le PMTH étant lié à M@GO par l'intermédiaire de l'EDA et du glutaraldéhyde, ce qui engendre M@GO-PM.

6. Matériau hybride, M@GO, comprenant de l'oxyde de graphène magnétique activé (MGO-A), relié de façon covalente à au moins un premier réactif de couplage, qui est une alkylpolyamine
• MGO-A étant du MGO activé par l'introduction de groupes acides et
• MGO étant de l'oxyde de graphène magnétique, formé par des nanoparticules magnétiques enrobées, modifiées avec au moins des groupes amino (NH₂) et/ou des groupes hydroxyle (OH) sur leur surface, couplées par des forces physiques et des liaisons covalentes à de l'oxyde de graphène, la liaison covalente étant une liaison amide ou ester entre des groupes amino ou hydroxyle des nanoparticules magnétiques enrobées modifiées et des groupes acides présents dans les feuillets d'oxyde de graphène.

7. Matériau précurseur, M@GO-RA, comprenant le matériau hybride M@GO défini dans la revendication 6, dans lequel le premier réactif de couplage, l'alkylpolyamine, est relié à un second réactif de couplage, de préférence un polyaldéhyde, plus préférablement le second réactif de couplage est le glutaraldéhyde.

8. Matériau précurseur intermédiaire, M@GO-RA-THC, comprenant le matériau précurseur défini dans la revendication 7, M@GO-RA, lié à un thiocarbonohydrazide.

9. Matériau précurseur intermédiaire, M@GO-Glut-THC, selon la revendication 8, dans lequel le second réactif de couplage est le glutaraldéhyde.

10. Procédé de préparation du matériau composite M@GO-LG défini dans l'une des revendications 1 à 5, comprenant :
• la réaction d'oxyde de graphène magnétique activé (MGO-A), avec au moins un premier réactif de couplage, qui est une polyalkylamine, ce qui permet d'obtenir le produit M@GO,
• la réaction du produit résultant de l'étape précédente avec :
∘ un ligand comprenant un groupe fonctionnel chélateur ou
∘ en premier lieu, avec un second réactif de couplage, puis avec un ligand ;
de façon telle que ledit ligand se lie à M@GO par au moins la polyalkylamine en tant que premier réactif de couplage, ce qui permet d'obtenir le matériau composite M@GO-LG.

11. Procédé selon la revendication 10, comprenant :
a) la modification de nanoparticules magnétiques (MNP) enrobées avec des groupes fonctionnels amino ou hydroxyle, ce qui permet d'obtenir des nanoparticules magnétiques enrobées modifiées ;
b) le couplage des nanoparticules magnétiques enrobées modifiées à de l'oxyde de graphène à l'aide d'un agent de couplage qui forme une liaison amide ou ester, un couplage physique ayant également lieu (par des interactions électrostatiques et des forces de van der Waals) ce qui permet d'obtenir du MGO ;
c) l'activation du MGO par l'ajout de groupes acides sur la surface des feuillets d'oxyde de graphène, ce qui permet d'obtenir du MGO activé, MGO-A ;
d) la fixation d'au moins un premier réactif de couplage, qui est une polyalkylamine, à des groupes acides qui se trouvent sur la surface du MGO activé, ce qui permet de les transformer en points d'ancrage susceptibles d'être fonctionnalisés, ce qui permet d'obtenir le produit M@GO ; et
e) la réaction du produit de l'étape précédente (M@GO) avec
e1) un ligand comprenant un groupe fonctionnel chélateur ou
e2) en premier lieu, avec un second réactif de couplage, puis avec un ligand,
de façon telle que ledit ligand se lie à M@GO par au moins le premier réactif de couplage, ce qui permet d'obtenir le composite M@GO-LG.

12. Procédé selon la revendication 10, dans lequel le MGO est activé par l'introduction de groupes acides sur la surface de l'oxyde de graphène magnétique.

13. Procédé de préparation du matériau hybride, M@GO, défini dans la revendication 6, comprenant :
a) la modification de nanoparticules magnétiques (MNP) enrobées avec des groupes fonctionnels amino ou hydroxyle, ce qui permet d'obtenir des nanoparticules magnétiques enrobées modifiées ;
b) le couplage des nanoparticules magnétiques enrobées modifiées à de l'oxyde de graphène à l'aide d'un agent de couplage qui forme une liaison amide ou ester, ce qui permet d'obtenir de l'oxyde de graphène magnétique, MGO ;
c) l'activation du MGO par l'ajout de groupes acides sur la surface des feuillets d'oxyde de graphène, ce qui permet d'obtenir du MGO activé, MGO-A ; et
d) la fixation d'au moins un premier réactif de couplage, qui est une polyalkylamine, à des groupes acides qui se trouvent sur la surface du MGO activé, ce qui permet de les transformer en points d'ancrage susceptibles d'être fonctionnalisés, ce qui permet d'obtenir le produit M@GO.

14. Utilisation du matériau défini dans l'une des revendications 1 à 5 ou du matériau défini dans la revendication 6, 7 ou 8-9 en tant qu'adsorbant de métaux nobles ou de métaux de transition, de préférence dans la décontamination et le traitement de rejets.
